# EUROPÄISCHE PATENTSCHRIFT

(11) **EP 2 944 905 B1**
(45) Veröffentlichungstag und Bekanntmachung des Hinweises auf die Patenterteilung: **27.11.2019**
(21) Anmeldenummer: 14001680.9
(22) Anmeldetag: 13.05.2014
(51) Int. Cl.: F27B 9/02, F27B 9/22, F27B 9/26, F27B 17/00, F27D 99/00

(54) **Ofen zum Brennen von keramischen Formlingen**
Kiln for the firing of ceramic blanks
Four de brûlage d'ébauches en céramique

(43) Veröffentlichungstag der Anmeldung: 18.11.2015
(73) Patentinhaber: Keller HCW GmbH, 49479 Ibbenbüren-Laggenbeck (DE)
(72) Erfinder: Gausmann, Heiner, 49205 Hasbergen (DE); Heitmann, Peter, 48612 Horstmar (DE); Hasing, Rainer, 48480 Spelle (DE)
(74) Vertreter: Pott, Ulrich

(56) Entgegenhaltungen:
- DE-A1- 4 442 850
- DE-A1-102011 112 838
- DE-B- 1 177 541
- GB-A- 461 088
- US-A- 1 437 769
- US-A- 1 499 354
- US-A- 1 522 166

## Beschreibung

Die Erfindung bezieht sich auf einen Ofen zum Brennen von keramischen Formlingen, insbesondere von Ziegeln mit einer Mehrzahl von parallel zueinander und entlang einer längs verlaufenden Ofenstrecke bewegbaren, mehrere Ofenwagen umfassenden Zügen, auf denen die Formlinge anzuordnen sind, wobei die Ofenstrecke eine Brennzone zur Erhitzung der Formlinge aufweist und wobei nebeneinander angeordnete Züge in entgegengesetzte Richtungen bewegbar sind ohne eine Richtungsumkehr durch eine Brennzone, wobei zumindest ein Lüfter vorgesehen ist.

Ein Ofen dieser Art ist aus der DE 10 2011 112 838 A1 bekannt. Bei diesem Ofen erfolgt die Bestückung des Ofens auf der einen Seite der Ofenstrecke, während auf der gegenüberliegenden anderen Seite der Ofenstrecke eine Bestückung der jeweiligen Züge mit Formlingen für einen Transport durch den Ofen entlang der Ofenstrecke in die entgegengesetzte Richtung erfolgt. Dabei findet in den jeweiligen Zügen keine Richtungsumkehr statt, so dass sich die Formlinge auf ihren jeweiligen Ofenzügen durch die Brennzone hindurch bewegen und jeweils am bezüglich ihrer Bestückung entgegengesetzten Ende der Ofenstrecke dieser entnommen werden. Durch die auf beiden Seiten der Brennzone jeweils aneinander vorbei bewegten Formlinge werden von den bereits die Brennzone verlassenden Formlinge andere als Kaltbesatz aufgeheizt, bevor sie in die Brennzone gelangen. Durch den Verzicht auf eine Richtungsumkehr in der Brennzone wird der zur Verfügung stehende Bauraum des Ofens optimal ausgenutzt. Die Formlinge werden in der Brennzone durch in einer Längsgasse (Haupttunnel) zwischen den Zügen angeordnete Brennelemente erhitzt. Hierdurch kann die verwendete Heizenergie direkt zu den Formlingen gebracht werden, was zu einer erhöhten Effizienz in der Brennzone und mithin zu einem verringerten Energieeinsatz führt. Die Erhitzung der Ziegel oder dergleichen Formlinge kann unmittelbar und gleichmäßig über deren Aufbauhöhe im Besatz verteilt erfolgen.

Dieser gattungsgemäße Ofen hat gegenüber herkömmlichen anderen Öfen erhebliche Vorteile, soll jedoch weiter verbessert werden.

Aus der US 1,499,354 A ist ein Doppeltunnelofen bekannt, bei dem der eine mehrere Ofenwagen umfassende Ofenwagenzug in entgegengesetzter Richtung zu dem anderen Ofenwagenzug durch eine Brennzone bewegt wird, wobei der jeweilige Ofenwagen über Räder auf einer Schiene abläuft und der jeweilige Ofenwagen mit einem Gehäuse in einer zugeordneten Schleifabdichtung, die seitlich neben den Schienen angeordnet ist, bewegt werden kann. Diese Schleifabdichtung wird durch ein jeweiliges Gehäuse gebildet, in die ein mineralisches Material eingefüllt ist, in das im Verlaufe der Bewegung des Ofenwagens ein abgekröpfter Schenkel des Ofenwagengehäuses eintaucht. In diesem Ofen ist jedoch nur ein Ofenwagenbesatz von Doppelzügen zu verarbeiten.

Aus der US 1,437,769 A ist ein Doppeltunnelofen bekannt, bei dem ebenfalls der eine Ofenwagenzug aus mehreren Ofenwagen in entgegengesetzter Richtung zu dem anderen Ofenwagenzug aus mehreren Ofenwagen zu bewegen ist. Auch hier ist ein abgewinkelter Schenkel eines Ofenwagens in einer seitlichen Schleifabdichtung, die als Sandrinne ausgebildet ist, geführt. Ebenfalls sind hier seitliche Erweiterungen an einem Ofenwagen in Ausnehmungen einer Seitenwandung des Tunnels oder der Seitenwandung eines benachbarten Ofenwagens vorgesehen, in die entsprechende Erweiterungen des Ofenwagens oder einer seitlichen Tunnelwand eingreifen, um eine Hitzeabschirmung ausbilden zu können. Die Bearbeitung eines Ofenwagenbesatzes ist jedoch auch nur auf die beiden Ofenwagenzüge beschränkte.

Es ist Aufgabe der vorliegenden Erfindung, einen Ofen der eingangs genannten Art weiter zu optimieren.

Zur Lösung dieser Aufgabe zeichnet sich der Ofen der eingangs genannten Art dadurch aus, dass ein jeweiliger Ofenwagen über eine Achse verbundene, auf einer jeweiligen Schiene mit einem zugeordnetem Schleifabdichtungselement aus einem mineralischen Material abrollbare Räder aufweist, wobei benachbarte Räder von benachbarten Ofenwagen jeweils auf Schienen abrollbar sind, zwischen denen ein gemeinsames Schleifabdichtungselement aus einem mineralischen Material angeordnet ist, und wobei zwischen den über eine Achse verbundenen Rädern eines Ofenwagens Kühlrohre angeordnet sind und/oder wobei benachbarte Ofenwagen wechselseitig eine Ausnehmung und eine Erweiterung aufweisen und ein benachbarter Ofenwagen eine in die Ausnehmung eines benachbarten Ofenwagens eingreifende Erweiterung nach Art eines Nut-/Federsystems mit einem Spalt aufweist.

Damit ist ein Ofen geschaffen, bei der der jeweilige Ofenwagen auf der jeweiligen Schiene abrollbare Räder aufweist, die über das Schleifabdichtungselement aus einem mineralischem Material weniger beanspruchte Räder aufweist, da die Schleifabdichtungselemente aus dem mineralischen Material die auftretenden Temperaturen in den Schienen und in den Rädern aufgrund der Temperaturabschirmungsfunktion, die dieses Schleifabdichtungselement übernimmt, wesentlich reduziert werden kann. Damit ist die Verschleißanfälligkeit des Ofenwagens und seiner Räder wesentlich vermindert. Das Schleifabdichtungselement ist so vorgesehen, dass es zwei benachbarten Ofenwagen zugeordnet ist, indem es zwischen zwei benachbarten Schienen von zwei benachbarten Rädern gelegen ist. Die Ofenwagen sind dabei so ausgebildet, dass ein Spalt zwischen zwei Ofenwagen in das Schleifabdichtungselement aus dem mineralischen Material mündet, wobei die jeweiligen Ofenwagen insofern eine Erweiterung und eine kongruente zu der Erweiterung am benachbarten Ofenwagen ausgebildete Ausnehmung aufweisen, die nach Art eines Nut-/Federsystems ineinandergreifen mit einem dazwischen gelegenen Labyrinthspalt, so dass das Nut-/Federsystem eine Labyrinthabdichtung darstellt mit einer zusätzlichen Schleifabdichtung aus dem erwähnten mineralischen Material. Das Schleifabdichtungselement kann als Sandrinne ausgebildet sein, die den Zwischenraum zwischen zwei benachbarten Schienen ausfüllt.

Dem jeweiligen Ofenwagen sind Kühlrohre zu-geordnet, auf denen diese ablaufen. Dabei kann der Ofenwagen so gestaltet sein, dass mit Abstand zueinander angeordnete Kühlrohre vorgesehen sind. In diesem gekühlten Bereich des Ofenwagens sind dann bevorzugtermaßen Lager für die Achse der Räder eines jeden Ofenwagens gelegen, so dass auch diese Lagerstellen sehr verschleißunanfällig in einem gekühlten Bereich gelegen sind.

Weitere vorteilhafte Ausgestaltungen der Erfindung ergeben sich aus weiteren Unteransprüchen, der nachfolgenden Beschreibung und der Zeichnung.

In der Zeichnung zeigen:

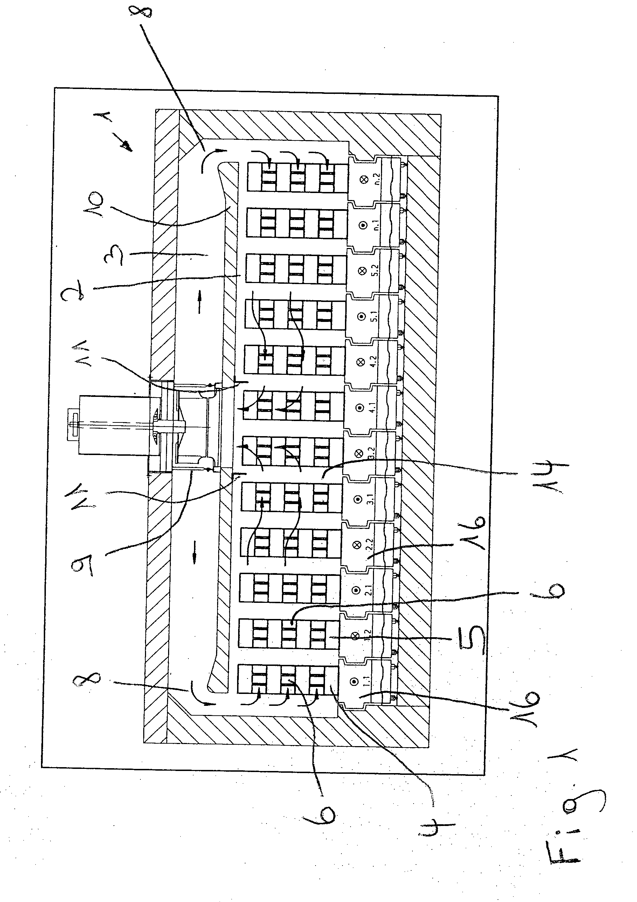

- Fig. 1: in einer schematischen Querschnittsdarstellung ein erstes Ausführungs-beispiel eines Ofens mit einem Radialventilator als Lüfter;
- Fig. 2: eine schematische Querschnittsdarstellung (vergrößert) der Züge im Be-reich der jeweiligen Ofenwagen und,
- Fig. 3: vergrößert die Detailansicht gemäß III in Fig. 2.

In der Zeichnung sind grundsätzlich übereinstimmende Teile mit übereinstimmenden Bezugsziffern versehen.

Allgemein mit 1 ist der Ofen beziffert, der eine Ofenstrecke 2 aufweist mit einer Brennzone, einem Umwälzkanal 3 und Kühl- und Aufwärmzonen. In dem Ofen 1 sind in den Ausführungsbeispielen insgesamt zwölf Züge 4, 5 dargestellt, wobei jeweils ein Zug 4 in eine Richtung aus der Zeichnungsebene heraus bewegt wird und der Zug 5 in entgegengesetzte Richtung, also in die Zeichnungsebene herein bewegt wird.

Ein Zug 4, der mit Formlingen 6 bestückt ist genauso wie der Zug 5, kann einen kalten Besatz haben, wogegen der Zug 5 einen warmen, also schon gebrannten Besatz an Formlingen 6 hat, so dass jeweils abwechselnd nebeneinander kalte und warme Züge 4, 5 transportiert werden mit Ausnahme des ersten Zuges ganz links in den Zeichnungsblättern und dem rechten letzten Zug, wobei der erste Zug 4 einen kalten Besatz hat und der letzte rechte Besatz einen warmen Besatz hat. Der warme Besatz kann daher nur an der rechten Außenseite seine Wärme an den links benachbarten Besatz dieses Zuges abgeben kann, der wiederum ein kalter Besatz ist. In dem gezeigten Ausführungsbeispiel kann dieser Zug seine Wärme an die Luft 8abgeben, die von dem Lüfter 9, der in dem gezeigten Ausführungsbeispiel ein Radialverdichter ist, angesaugt wird, so dass über den Radialventilator 9 eine Zwangskonvektion innerhalb des Ofens und entlang der Ofenstrecke stattfindet.

Unterhalb des Umwälzkanals 3 ist eine Wandung 10 vorgesehen, an der Luftleitvorrichtungen 11 vorgesehen sind, die verhindern, dass Luft 8 unter Umgehung der Formlinge 6 an der Wandung 10 entlanggefördert wird.

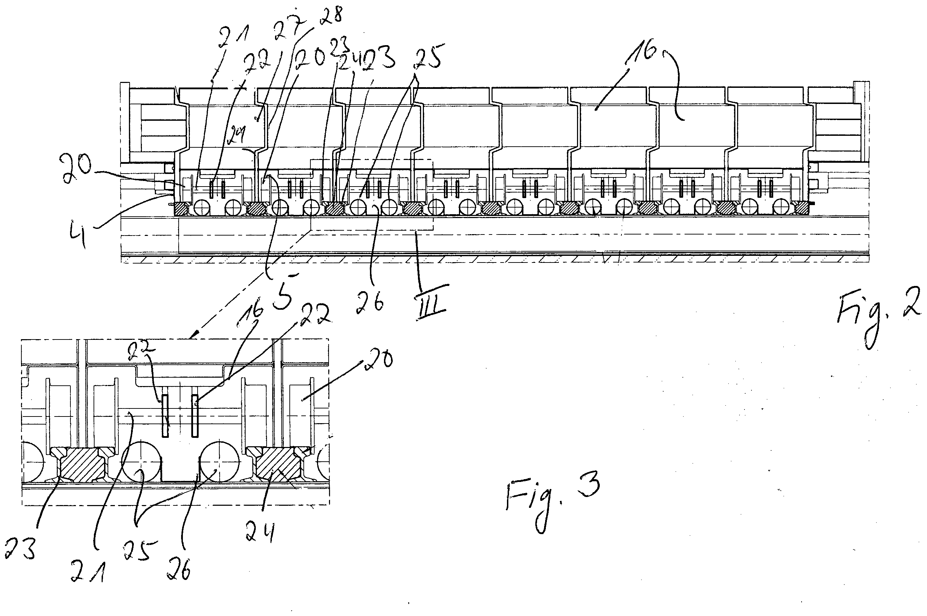

In der Darstellung nach Fig. 2 sind die einzelnen Ofenwagen 16 der Züge 4 und 5 näher dargestellt. Diese Ofenwagen haben Räder 20, die über eine Achse 21 miteinander verbunden sind. Die Achsen 21 sind in Lagern 22 gelagert. Die Räder 20 laufen auf Schienen 23 ab. Benachbarte Schienen 23 sind derart einander zugeordnet, dass zwischen diesen benachbarten Schienen 23 ein Schleifabdichtungselement 24 gelegen ist. Dieses ist durch eine Sandrinne gebildet. Innen sind noch jeweilige Kühlrohre 25 vorgesehen. Zwischen den Kühlrohren 25 ist eine Klammer 26 zur Befestigung der Kühlrohre 25 gelegen. Die Ofenwagen 16 sind nach Art eines Nut-/Federsystems einander zugeordnet, indem ein Ofenwagen 16 jeweils eine Erweiterung 27 aufweist, die in eine kongruent ausgebildete Ausnehmung 28 eines benachbarten Ofenwagens 16 angreift mit einem Spalt 29, der oberhalb des Schleifabdichtungselementes 24 endet, so dass dadurch die Temperatureinwirkung wesentlich verringert ist innerhalb des Ofens 1.

## Patentansprüche

1. Ofen (1) zum Brennen von keramischen Formlingen (6), insbesondere von Ziegeln mit einer Mehrzahl von parallel zueinander und entlang einer längs verlaufenden Ofenstrecke bewegbaren, mehrere Ofenwagen (16) umfassenden Zügen (4, 5), auf denen die Formlinge (6) anzuordnen sind, wobei die Ofenstrecke eine Brennzone zur Erhitzung der Formlinge (6) aufweist, wobei nebeneinander angeordnete Züge (4, 5) in entgegengesetzte Richtungen ohne eine Richtungsumkehr durch eine Brennzone bewegbar sind, wobei zumindest ein Lüfter (9) vorgesehen wobei ein jeweiliger Ofenwagen (16) über eine Achse (21) verbun-dene, auf einer jeweiligen Schiene (23) mit einem zugeordnetem Schleifabdichtungselement (24) aus einem mineralischen Material abrollbare Räder (20) aufweist, wobei benachbarte Räder von benachbarten Ofenwagen (16) jeweils auf Schienen (23) abrollbar sind, zwischen denen ein gemeinsames Schleifabdichtungselement (24) aus dem mineralischen Material angeordnet ist, **dadurch gekennzeichnet,** das zwischen den über eine Achse (21) verbundenen Rädern (20) eines Ofenwagens (16) Kühlrohre (25) angeordnet sind und/oder wobei benachbarte Ofenwagen (16) wechselseitig eine Ausnehmung (28) und eine Erweiterung (27) aufweisen und ein benachbarter Ofenwagen (16) eine in die Ausnehmung (28) eines benachbarten Ofenwagens (16) eingreifende Erweiterung (27) nach Art eines Nut-/Federsystems mit einem Spalt aufweist.

2. Ofen nach Anspruch 1, **dadurch gekennzeichnet, dass** das Schleifabdichtungselement (24) als Sandrinne ausgebildet ist.

3. Ofen (1) nach Anspruch 1 oder 2, **dadurch gekennzeichnet, dass** die Achse (21) der Räder (20) eines Ofenwagens (16) in einem mittleren Bereich des Ofenwagens über Lager (22) gelagert ist.

4. Ofen (1) nach Anspruch 3, **dadurch gekennzeichnet, dass** die Lager (22) der Achse (21) der Räder (20) eines Ofenwagens (16) oberhalb und zwischen zwei Kühlrohren (25) gelegen sind.

## Claims

1. Kiln (1) for firing ceramic blanks (6), in particular bricks, having a plurality of trains (4, 5) which comprise a number of kiln cars (16) and are movable in parallel with one another and along a longitudinal kiln portion, and on which the blanks (6) are to be arranged, the kiln portion having a firing zone for heating the blanks (6), trains (4, 5) which are arranged side-by-side being movable in opposite directions through a firing zone, without a reversal of direction, at least one fan (9) being provided, each kiln car (16) having wheels (20) which are connected via an axle (21), and which are able to roll along a particular rail (23) which has a corresponding abradable sealing element (24) made of a mineral material, it being possible for adjacent wheels of adjacent kiln cars (16) to roll on respective rails (23), between which a shared abradable sealing element (24) made of the mineral material is arranged, **characterised in that** cooling tubes (25) are arranged between the wheels (20) of a kiln car (16) which are connected via an axle (21) and/or adjacent kiln cars (16) having a slot (28) on one side and a ridge (27) on the other side and an adjacent kiln car (16) having a ridge (27) engaging in the slot (28) of an adjacent kiln car (16) in the manner of a tongue/groove system with a gap.

2. Kiln according to claim 1, **characterised in that** the abradable sealing element (24) is designed as a sand channel.

3. Kiln (1) according to either claim 1 or claim 2, **characterised in that** the axle (21) of the wheels (20) of a kiln car (16) is mounted by means of bearings (22) in a central region of the kiln car.

4. Kiln (1) according to claim 3, **characterised in that** the bearings (22) of the axle (21) of the wheels (20) of a kiln car (16) are located above and between two cooling tubes (25).

## Revendications

1. Four (1) pour la combustion d'ébauches céramiques (6), en particulier de briques avec une pluralité de trains (4, 5) comprenant plusieurs wagons de four (16), mobiles parallèlement l'un à l'autre et le long d'un trajet de four s'étendant longitudinalement, sur lesquels les ébauches (6) sont à agencer, dans lequel le trajet de four présente une zone de combustion pour le chauffage des ébauches (6), dans lequel des trains (4, 5) agencés l'un à côté de l'autre sont mobiles dans des sens opposés sans inversion de sens par une zone de combustion, dans lequel au moins un ventilateur (9) est prévu, dans lequel un wagon de four (16) respectif présente des roues (20) pouvant rouler sur un rail (23) respectif avec un élément de joint à frottement (24) associé en un matériau minéral, raccordées par un essieu (21), dans lequel des roues contiguës de wagons de four (16) contigus peuvent rouler respectivement sur des rails (23), entre lesquels un élément de joint à frottement (24) commun en matériau minéral est agencé, **caractérisé en ce que** des tubes de refroidissement (25) sont agencés entre les roues (20) raccordées par le biais d'un essieu (21) d'un wagon de four (16) et/ou dans lequel des wagons de four (16) contigus présentent mutuellement un évidement (28) et un élargissement (27) et un wagon de four (16) contigu présente un élargissement (27) venant en prise dans l'évidement (28) d'un wagon de four (16) contigu à la manière d'un système de rainure et languette avec une fente.

2. Four selon la revendication 1, **caractérisé en ce que** l'élément de joint à frottement (24) est réalisé comme rigole de sable.

3. Four (1) selon la revendication 1 ou 2, **caractérisé en ce que** l'essieu (21) des roues (20) d'un wagon de four (16) est logé dans une zone médiane du wagon de four par le biais de paliers (22).

4. Four (1) selon la revendication 3, **caractérisé en ce que** les paliers (22) de l'essieu (21) des roues (20) d'un wagon de four (16) sont placés au-dessus et entre deux tubes de refroidissement (25).
